# EUROPÄISCHE PATENTSCHRIFT

(11) **EP 1 801 683 B1**
(45) Veröffentlichungstag und Bekanntmachung des Hinweises auf die Patenterteilung: **10.08.2011**
(21) Anmeldenummer: 06025193.1
(22) Anmeldetag: 06.12.2006
(51) Int. Cl.: G05D 16/00, G05B 23/02

(54) **Gas-Druckregel und Messanlage**
Gas pressure regulating and measuring system
Régulateur de pression du gaz et installation de mesure

(30) Priorität: 22.12.2005 DE 102005062161
(43) Veröffentlichungstag der Anmeldung: 27.06.2007
(73) Patentinhaber: Open Grid Europe, 45141 Essen (DE)
(72) Erfinder: Böser, Wolfgang, Dipl.-Ing., 40699 Erkrath (DE); Benten, Raimund, Dipl.-Ing., 49774 Lähden (DE); Steiner, Klaus, Dr.-Ing., 44795 Bochum (DE)
(74) Vertreter: Harlacher, Mechthild

(56) Entgegenhaltungen:
- EP-A- 1 598 717
- DE-A1- 19 509 858
- CERBE GÜNTER: "Grunlagen der Gastechnik" 1999, CARL HANSER VERLAG , MÜCHEN WIEN , XP002531466 * Seite 215 - Seite 228; Abbildung 6.3 * * Seite 420 - Seite 421, Absatz 10.2.3 * * Seite 176 - Seite 177, Absatz 5.2.1.3; Abbildung 5.16 *

## Beschreibung

Die Erfindung betrifft eine Gas-Druckregel- und -messanlage, insbesondere für Erdgas, zum Messen und Regeln des Druckes und des Durchflusses des Gases bei der Übergabe von einem ersten Leitungsnetz in ein zweites Leitungsnetz, wobei die Transport- bzw. Strömungsrichtung des Gases wechselt, mit mindestens einem Leitungsstrang, der einerseits an das erste Leitungsnetz und andererseits an das zweite Leitungsnetz angebunden ist und der an mindestens einem Ende eine Absperreinrichtung aufweist, mindestens einer bidirektional arbeitenden Messeinrichtung zum Messen des Volumendurchflusses und/oder des Massendurchflusses und/oder des Energiedurchflusses in dem Leitungsstrang und mit einer Regeleinrichtung, die den Volumendurchfluss, den Massendurchfluss, den Energiedurchfluss und/oder den Druck regelt.

Derartige Gas-Druckregel- und -messanlagen (GDRM-Anlagen) sind aus der Praxis bekannt. Sie dienen zum Messen und Regeln des Druckes und des Durchflusses insbesondere von Erdgas bei der Übergabe von einem ersten Leitungsnetz in ein zweites Leitungsnetz. Im DVGW-Arbeitsblatt G 491 sind technische Regeln u. a. für die Planung und den Betrieb von Gas-Druckregelanlagen für Eingangsdrücke bis einschließlich 100 bar beschrieben. Das DVGW-Arbeitsblatt G 492 betrifft Gas-Messanlagen für einen Betriebsdruck bis einschließlich 100 bar.

Bei dem ersten Leitungsnetz kann es sich beispielsweise um ein Fernleitungsnetz handeln, in dem üblicherweise ein Transportdruck von ca. 60 bar herrscht. Bei dem zweiten Leitungsnetz kann es sich um das Leitungsnetz eines regionalen Versorgungsuntemehmens handeln.

Die GDRM-Anlage beinhaltet eine Messeinrichtung zur Messung des Durchflusses. Die Messeinrichtung kann beliebig ausgebildet sein. Für Erdgase werden in der Praxis in der Regel volumetrische Mess- und WirkdruckverFahren eingesetzt. Typische Messgeräte sind Blenden, Verdrängungs-, Turbinen-, Ultraschall- und Wirbelgaszähler. Die Massendurchflussmessung nach dem Coriolis-Prinzip ist ebenfalls bekannt. Im geschäftlichen bzw. amtlichen Messwesen sind grundsätzlich geeichte Messeinrichtungen zu verwenden. Im gesetzlichen Messwesen im Gashochdruckbereich werden aktuell Dauerreihenschaltungen insbesondere aus Turbinenradgaszähler und Ultraschall-Durchflussmessgeräte verwendet. Hier überwacht der eine Zähler den anderen um die für Abrechnungszwecke hohe Messgenauigkeit im Dauerbetrieb zu gewährleisten. Im Unterschied zu den Ultraschallgaszählern sind die derzeit am Markt erhältlichen Turbinenradgaszähler nicht bidirektional einsetzbar. In umgekehrter Anströmungsrichtung liegt ihr Messfehler deutlich über den durch die Eichordnung zugelassenen Werten.

Üblicherweise werden GDRM-Anlagen für den unidirektionalen Betrieb vorgesehen, d. h. die Gas-Druckregeleinrichtung und die Gas-Messeinrichtung werden nur von einer Richtung aus angeströmt.

In dem Fachbuch "Cerbe Günter: Grundlagen der Gastechnik 1999, Carl Hanser Verlag München-Wien, XP 002531466" ist auf Seite 221 in Bild 6.3 eine Gas-Druckregel- und Messanlage für Erdgas dargestellt. Mindestens ein Leitungsstrang ist einerseits an ein erstes Leitungsnetz (Gasleitung) und andererseits an eine Speicheranlage angebunden. Der Leitungsstrang, der an mindestens einem Ende eine Absperreinrichtung aufweist, ist im Anschluss an ein Gasmengenmessgerät in zwei Teil-Leitungsstränge aufgespalten, welche vor der Speicheranlage wieder zu einem Leitungsstrang zusammengeführt werden.

Das Erdgas strömt in dem unteren Teil-Leitungsstrang und dem oben Teil-Leitungsstrang nur in eine einzige Richtung. Es ist davon auszugehen, dass das Gasmengenmessgerät bidirektional wirksam ist, weil das Erdgas sowohl bei der Einspeicherung als auch bei der Ausspeicherung über das Gasmengenmessgerät strömt und jeweils die einzuspeichernde als auch die auszuspeichernde Gasmenge gemessen werden muss.

Der obere Teil-Leitungsstrang weist u. a. ein Druckregelgerät auf, welches nur in Richtung der Ausspeicherung wirksam. Beim Einspeichern wird das Druckregelgerät nicht angeströmt. Vielmehr strömt das Erdgas über den Verdichter 3, wobei der Druck des Erdgases auf den Druck im Speicher erhöht wird, der in der Regel um ein Vielfaches höher ist als der Druck des Erdgases in der Leitung.

Ferner ist auf den Seiten 176 und 177 in Bild 5.16 der Aufbau einer Gas-Druckregel- und Messanlage (GDRM) dargestellt. Ein Leitungsstrang ist einerseits an ein erstes Leitungsnetz (Stations-Eingangsarmatur) und anderseits an ein zweites Leitungsnetz (Isoliertrennstelle, Anschluss für Nebenanlage) angebunden. Der Leitungsstrang, in dem eine Messeinrichtung und eine Regeleinrichtung wirksam sind, wird ausschließlich in einer Richtung von Erdgas durchströmt.

Im Zuge der Liberalisierung des Gasmarktes ist es in zunehmendem Maße erforderlich, die Transportrichtung bzw. die Strömungsrichtung des Gases zu wechseln. Daher ist es in der Praxis üblich, die beiden Enden des Leitungsstranges mit zwei sogenannten Reversierumgängen bzw. einem Reversierungs-Leitungssystem zu verbinden, welches an die beiden Leitungsnetze angebunden ist.

Das Reversierungs-Rohrleitungssystem weist Absperreinrichtungen bzw. Absperrarmaturen bzw. Fahrwegsarmaturen und Sicherheitsabsperrarmaturen auf, um das Gas, das aus zwei verschiedenen Richtungen kommen kann, in die eine Strömungsrichtung zu lenken, in der die Mess- und die Druck-/Durchflussregeleinrichtung messen bzw. regeln.

Das Reversierungs-Leitungssystem ist wegen der Vielzahl der Komponente technisch aufwändig und somit kostenintensiv und bedingt eine große räumliche Ausdehnung der GDRM-Anlage.

Die Aufgabe der Erfindung besteht demgemäß darin, eine GDRM-Antage für den bidirektionalen Betrieb zu schaffen, die nur einen geringen technischen Aufwand erfordert und deren Platzbedarf gering ist.

Diese Aufgabe wird durch eine Gas-Druckregel- und -messanlage mit den Merkmalen des Anspruches 1 gelöst.

Der Leitungsstrang ist direkt, d. h. ohne die Verwendung eines aufwändigen Reversierungs-Leitungssystems, an die beiden Leitungsnetze angeschlossen. Die Mess-, die Regeleinrichtung und die Absperreinrichtung sind derart ausgebildet, dass sie von beiden. Strömungsrichtungen aus angeströmt werden können.

Die erfindungsgemäße Gas-Druckregel- und -messanlage (GDRM-Anlage), insbesondere für den Hochdruckbereich, ist kompakt und erfordert wenig Raumbedarf. Gegenüber dem Stand der Technik können die Investitionskosten der GDRM-Anlage um bis zu 15 % gesenkt werden. Zudem ist die Anlage

übersichtlich und wartungsfreundlich. Infolge des geradlinigen Aufbaus werden atypische Schwingungen vermieden.

Die GDRM-Anlage ist in modularer Strangbauweise errichtet. Dies ermöglicht den Zubau weiterer Strecken, um die Transportkapazität zu erhöhen. Dadurch wird die Versorgungssicherheit gewährleistet. Vorzugsweise sind daher mindestens zwei parallele Leitungsstränge vorgesehen. Die GDRM-Anlage kann beispielsweise einen Betriebs-Leitungsstrang und einen Reserve-Leitungsstrang beinhalten. Es können aber auch zwei oder mehr Betriebs-Leitungsstränge und ein Reserve-Leitungsstrang parallel geschaltet werden.

Eine bevorzugte Ausführungsform ist dadurch gekennzeichnet, dass zwei Messeinrichtungen hintereinander in den Leitungsstrang eingebunden sind. Bei den Messeinrichtungen handelt sich vorteilhafterweise um Ultraschall-Durchflussmessgeräte oder um Coriolis-Massendurchflussmessgeräte.

Vorzugsweise beträgt die Länge eines axialen Abstandes a zwischen den beiden Messeinrichtungen zwischen 0 und dem 20-fachen des Durchmessers D des Leitungsstrangs.

Nach einem weiteren Merkmal der Erfindung ist der Messeinrichtung mindestens ein Strömungsgleichrichter vor- oder nachgeschaltet.

Versuche haben gezeigt, dass die Länge eines axialen Abstandes b, b' zwischen dem Strömungsgleichrichter, der jeweils in Strömungsrichtung vor der Messeinrichtung angeordnet ist und der Messeinrichtung zwischen 0 und dem 20-fachen des Durchmessers D des Leitungsstrangs zu bemessen ist.

Es bestehen in der Regel Wechselwirkungen zwischen der Schallemission einer Regeleinrichtung und der Schallemission/-Messung einer Messeinrichtung. Diese Wechselwirkung ist umso ausgeprägter, wenn Messeinrichtungen zur Durchflussmessung eingesetzt werden, deren Messprinzip - wie bei Ultraschall- und Coriolis-Durchfilussmessgeräten - auf Schallausbreitung und/oder Schwingungen beruhen. Schalldämpfende technische Vorrichtungen würden zu erhöhten Druckverlusten führen, die die Leitungskapazität empfindlich beeinträchtigen. Dies ist gerade im Erdgas-Transportgeschäft nicht tolerabel. Durch die Einhaltung der beanspruchten Bereichsgrenzen bei der Positionierung der Messeinrichtungen zueinander und die Einhaltung der beanspruchten Abstände der Messeinrichtungen zu den vorgeschalteten Strömungsgleichrichtern ist der bidirektionale Betrieb bei minimalen Druckverlusten möglich.

Spielen Druckverluste eine untergeordnete Rolle, kann sich mindestens ein Strömungsgleichrichter zwischen den Messeinrichtungen für den Durchfluss befinden, um die strömungsberuhigende Wirkung zu optimieren.

Eine bevorzugte Ausführungsform ist dadurch gekennzeichnet, dass die in beide Strömungsrichtungen wirksamen Filter mit Absperrklappen in Zwischenflanschausführung ausgerüstet sind.

Alternativ können die in beide Strömungsrichtungen wirksamen Filter auch Filterelemente aufweisen, die mit einer mechanischen Stützkonstruktion versehen sind.

Sofern die beiden Leitungsnetze für ein unterschiedliches Druckniveau ausgelegt sind, ist der Regeleinrichtung eine Sicherheitsabsperreinrichtung vor- oder nachgeschaltet. Diese schließt automatisch, wenn eine unzulässige Druckdifferenz auftritt.

Bei einer bevorzugten Ausführungsform ist der Durchfluss-Regeieinrichtung eine Vorwärmeinrichtung vor- oder nachgeschaltet.

Falls der Energiedurchfluss geregelt werden soll, weist die Durchfluss-Regel-/Messanlage ein Gerät zur Gasbeschaffenheitsbestimmung auf.

Die Erfindung wird im Folgenden anhand eines bevorzugten Ausführungsbeispiels der erfindungsgemäßen Gas-Druckregel- und -messanlage im Zusammenhang mit der Zeichnung näher erläutert.

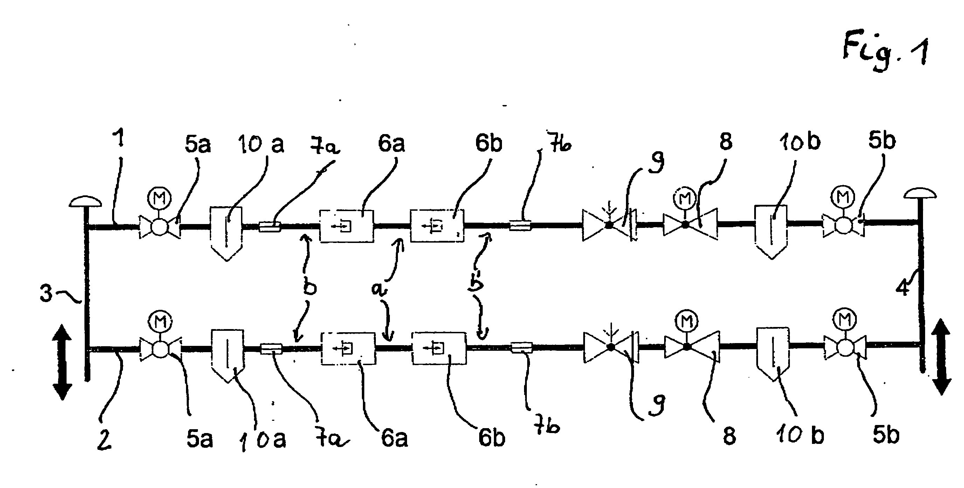

Die Zeichnung zeigt in
Fig. 1 eine schematische Darstellung der erfindungsgemäßen Gas-Druckregel- und -messanlage (GDRM-Anlage) für Erdgas.

Es handelt sich um eine GDRM-Anlage für Erdgas im Hochdruckbereich im geschäftlichen Verkehr. Die GDRM-Anlage ist in standardisierter und modularer Strangbauweise errichtet. Die Anlage beinhaltet einen Betriebs-Leitungsstrang bzw. eine Betriebsstrecke 1 und einen Reserve-Leitungsstrang bzw. eine Reservestrecke 2. Die Reservestrecke 2 ist aus Verfügbarkeitsgründen empfehlenswert, aber für den Betrieb nicht zwingend notwendig. Der Betriebs-Leitungsstrang 1 und der Reserve-Leitungsstrang 2 sind einerseits an ein erstes Leitungsnetz 3 und andererseits an ein zweites Leitungsnetz 4 angebunden. Bei der beispielsweise dargestellten Anlage ist die Druckstufe des Leitungsnetzes 4 niedriger als die Druckstufe des Leitungsnetzes 3 ausgelegt. Beide Leitungsstränge 1 und 2 sind hinsichtlich der Komponenten gleich aufgebaut. Gleiche Komponenten sind mit gleichen Bezugsziffem versehen.

Im folgenden wird der Aufbau des Betriebs-Leitungsstranges 1 erläutert:

An beiden Enden des Betriebs-Leitungsstranges 1 befinden sich Absperreinrichtungen 5a, 5b. Aus automationstechnischen Gründen sind diese in der Regel motorbetrieben. Zwei bidirektional arbeitende, für Abrechnungszwecke zugelassene Messeinrichtungen bzw. Messgeräte 6a, 6b sind zwischen den Absperreinrichtungen 5a und 5b hintereinander angeordnet und messen den Gasdurchfluss. Bei den Messeinrichtungen 6a, 6b handelt sich hier um Ultraschaligaszähler, Es werden zwei Ultraschallgaszähler hintereinander geschaltet, um die beiden Messergebnisse vergleichen und die für Abrechnungszwecke hohe Messgenauigkeit im Dauerbetrieb gewährleisten zu können.

Versuche haben gezeigt, dass vorteilhafterweise die Länge des axialen Abstandes a zwischen den beiden Messgeräten zwischen 0 und dem 20-fachen des Durchmessers D des Leitungsstrangs 1, 2 liegt.

In Strömungsrichtung vor den Messeinrichtungen 6a, 6b befindet sich jeweils ein Strömungsgleichrichter 7a, 7b. Dieser vergleichmäßigt die Strömung, reduziert dabei Messfehler und dämpft gleichzeitig störenden Schall. Spielen Druckverluste eine untergeordnete Rolle, lässt sich die strömungsberunhigende Wirkung durch einen weiteren Strömungsgleichrichter zwischen den beiden Messeinrichtungen optimieren.

Weiterhin haben Versuche gezeigt, dass die optimale Länge des axialen Abstandes b, b' zwischen dem Strömungsgleichrichter 7a, 7b und den Messgeräten 6a, 6b zwischen 0 und dem 20-fachen des Durchmessers D des Leitungsstrangs 1, 2 liegt.

Eine Regeleinrichtung 8 regelt den Durchfluss und den ausgangsseitigen Druck (Transportrichtung). Es kann alternativ vorrangig der Durchfluss oder vorrangig der Druck geregelt werden. Die Regeleinrichtung 8 ist von beiden Seiten durchströmbar bzw. ist in beiden Strömungsrichtungen wirksam. Für den Fall, dass sich die Auslegung der Druckstufen der Leitungsnetze 3 bzw. 4 unterscheiden, muss nach DVGW-Regelwerk mindestens eine Sicherheitsabsperreinrichtung 9 vorhanden sein, die das Leitungsnetz mit dem niedriger ausgelegten Druck vor Überschreitungen des zugelassenen Drucks schützt. Die Sicherheitsabsperreinrichtung 9 kann von beiden Seiten angeströmt werden.

Die Regeleinrichtung 8 als auch die Sicherheitsabsperreinrichtung 9 sind so ausgelegt, dass sie in der maximalen Offen-Stellung einen möglichst geringen Druckverlust erzeugen. Durch diesen Aufbau werden Rückwirkungen von der Regeleinrichtung auf die Messeinrichtung minimiert. Im Falle gleicher Auslegungsdruckstufen der Leitungsnetze 3, 4 ist eine Sicherheitsabsperreinrichtung nicht erforderlich.

Von den Messeinrichtungen 6a, 6b für den Durchfluss und der Regeleinrichtung 8 ausgehend sind in beide Richtungen des Leitungsstranges 1 Filter 10a und 10b angeordnet, wobei jeder Filter 10a, 10b so ausgebildet ist, dass er jeweils in Strömungsrichtung wirksam ist. Die Filter 10a, 10b sind z. B. mit nicht dargestellten Absperrklappen - in Zwischenflanschausführung - ausgerüstet. Unter.der Voraussetzung, dass das Gas, das den Leitungsstrang 1 durchströmt, keine Verschmutzungen wie Partikel, Flüssigkeiten und Kondensate aufweist, kann auf Filter 10a, 10b verzichtet werden.

Die Leitungsstränge 1 und 2 sind obertägig und die Leitungsnetze 3 und 4 untertägig verlegt. In den Leitungssträngen 1 und 2 oder in den Leitungsnetzen 3 und 4 sind im Bereich des Boden/Atmosphäre-Überganges nicht dargestellte lsolierkupptungen eingebaut.

Zusammengefasst hat die erfindungsgemäße GDRM-Anlage folgende Vorteile:
- denkbar einfacher und kostengünstiger Aufbau infolge Wegfalls der beiden Reversierumgänge einschließlich der Fahrwegs- und Sicherheitsabsperrarmaturen;
- einfache Kapazitätsanpassung durch Zubau mindestens eines weiteren Leitungsstranges gleicher oder angepasster Dimensionierung.
- geringe Messfehler durch minimale Rückwirkung der Regeleinrichtung auf die Messeinrichtung.

Im Rahmen der Erfindung sind ohne weiteres Abwandlungsmöglichkeiten gegeben. Die Messeinrichtung (6a, b) kann alternativ zum Volumendurchfluss den Massendurchfluss messen. Die GDRM-Anlage kann ein Gerät zur Gasbeschaffenheitsbestimmung aufweisen, so dass der Energiedurchfluss bestimmbar ist. Die Regeleinrichtung 8 kann alternativ den Massendurchfluss, den Energiedurchfluss und/oder den Druck regeln. Ferner können die Filter 10a, 10b mit Abscheidern kombiniert werden. Die Filter 10a, 10b können alternativ Filterelemente aufweisen, die mit einer mechanischen Stützkonstruktion versehen sind. Schließlich können in den Leitungsstrang 1, 2 Einrichtungen bzw. Systeme zur Vorwärmung des Erdgases eingebunden werden.

## Patentansprüche

1. Gas-Druckregel- und -messanlage, insbesondere für Erdgas, zum Messen und Regeln des Druckes und des Durchflusses des Gases bei der Übergabe von einem ersten Leitungsnetz (3) in ein zweites Leitungsnetz (4), wobei die Transport- bzw. Strömungsrichtung des Gases wechselt, mit
- mindestens einem Leitungsstrang (1, 2), der einerseits an das erste Leitungsnetz (3) und andererseits an das zweite Leitungsnetz (4) angebunden ist und der an mindestens einem Ende eine Absperreinrichtung (5a, b) aufweist,
- mindestens einer bidirektional arbeitenden Messeinrichtung (6a, b) zum Messen des Volumendurchflusses und/oder des Massendurchflusses und/oder des Energiedurchflusses in dem Leitungsstrang (1, 2) und mit
- einer Regeleinrichtung (8), die den Volumendurchfluss, den Massendurchfluss, den Energiedurchfluss und/oder den Druck regelt,
**dadurch gekennzeichnet,**
**dass** die Regeleinrichtung (8) in beide Strömungsrichtungen wirksam ist und dass die Messeinrichtung (6a, b) und die Regeleinrichtung (8) von dem Gas von der Jeweiligen Strömungsrichtung aus angeströmt werden.

2. Gas-Druckregel- und -messanlage nach Anspruch 1,
**dadurch gekennzeichnet,**
**dass** mindestens zwei parallel Leitungsstränge (1, 2) vorgesehen sind.

3. Gas-Druckregel- und -messanlage nach Anspruch 1 oder 2,
**dadurch gekennzeichnet,**
**dass** zwei Messeinrichtungen (6a, b) hintereinander in den Leitungsstrang (1, 2) eingebunden sind.

4. Gas-Druckregel- und -messanlage nach Anspruch 3,
**dadurch gekennzeichnet,**
**dass** die Länge eines axialen Abstandes a zwischen den beiden Messeinrichtungen (6a, 6b) zwischen 0 und dem 20-fachen des Durchmessers D des Leitungsstrangs (1, 2) beträgt.

5. Gas-Druckregel- und -messanlage nach einem der Ansprüche 1 bis 4,
**dadurch gekennzeichnet**,
das der Messeinrichtung (6a, b) mindestens ein Strömungsgleichrichter (7a, 7b) vor oder nachgeschaltet ist.

6. Gas-Druckregel- und -messanlage nach einem der Ansprüche 3 bis 5, **dadurch gekennzeichnet, dass** sich mindestens ein Strömungsgleichrichter zwischen zwei Messeinrichtungen (6a, 6b) befindet.

7. Gas-Druckregel- und -messanlage nach Anspruch 5 oder 6,
**dadurch gekennzeichnet,**
**dass** die Länge eines axialen Abstandes b, b' zwischen dem Strömungsgleichrichter (7a, 7b), der jeweils in Strömungsrichtung vor dem Messgerät (6a, 6b) angeordnet ist, und der Messeinrichtung (6a, 6b) zwischen 0 und dem 20-fachen des Durchmessers D des Leitungsstrangs (1, 2) bemessen ist.

8. Gas-Druckregel- und -messanlage nach einem der Ansprüche 1 bis 7,
**dadurch gekennzeichnet,**
**dass** ein Filter und/oder Abscheider (10) je Strömungsrichtung, in Strömungsrichtung vor der Messeinrichtung (6a, 6b) oder der Regeleinrichtung (8) angeordnet ist, wobei jeder Filter und/oder Abscheider (10) so ausgebildet ist, dass er jeweils in Strömungsrichtung wirksam ist.

9. Gas-Druckregel- und -messanlage nach Anspruch 8,
**dadurch gekennzeichnet,**
**dass** die Filter (10a, 10b) mit Absperrklappen in Zwischenflanschausführung ausgerüstet sind.

10. Gas-Druckregel- und -messanlage nach Anspruch 8,
**dadurch gekennzeichnet,**
**dass** die Filter (10a, 10b) Filterelemente aufweisen, die mit einer mechanischen Stützkonstruktion versehen sind.

11. Gas-Druckregel- und -messanlage nach einem der Ansprüche 1 bis 10,
**dadurch gekennzeichnet,**
**dass** der Regeleinrichtung (8) eine Vorwärmeinrichtung vor- oder nachgeschaltet ist.

12. Gas-Druckregel- und -messanlage nach einem der Ansprüche 1 bis 11,
**dadurch gekennzeichnet,**
**dass** der Regeleinrichtung (8) eine Sicherheitseinrichtung (9) vor oder nachgeschaltet ist.

13. Gas-Druckregel- und -messanlage nach einem der Ansprüche 1 bis 12,
**dadurch gekennzeichnet,**
**dass** der Leitungsstrang (1, 2) obertägig verlegt und die Leitungsnetze (3, 4) erdverlegt sind und dass im Leitungsstrang (1, 2) oder im Leitungsnetz (3, 4) im Bereich des Boden/Atmosphäre-Überganges lsolierkupplungen eingebaut sind.

14. Gas-Druckregel- und -messanlage nach einem der Ansprüche 1 bis 13,
**dadurch gekennzeichnet, dass** die Gas-Druckregel- und -messanlage ein Gerät zur Gasbeschaffenheitsbestimmung aufweist.

## Claims

1. Gas pressure regulating and measuring system, in particular for natural gas, for measuring and regulating the pressure and throughflow of the gas during transfer from a first line network (3) to a second line network (4), the transport or flow direction of the gas changing, with
- at least one line section (1, 2) which is tied, on the one hand, to the first line network (3) and, on the other hand, to the second line network (4) and which has a shut-off device (5a, 5b) at at least one end,
- at least one bidirectionally operating measuring device (6a, b) for measuring the volumetric throughflow and/or the mass throughflow and/or the energy throughflow in the line section (1, 2), and with
- a regulating device (8) which regulates the volumetric throughflow, the mass throughflow, the energy throughflow and/or the pressure,
**characterized in that** the regulating device (8) is active in both flow directions, and **in that** the gas flows onto the measuring device (6a, b) and the regulating device (8) from the respective flow direction.

2. Gas pressure regulating and measuring system according to Claim 1, **characterized in that** at least two parallel line sections (1, 2) are provided.

3. Gas pressure regulating and measuring system according to Claim 1 or 2,
**characterized in that** two measuring devices (6a, b) are incorporated one behind the other into the line section (1, 2).

4. Gas pressure regulating and measuring system according to Claim 3,
**characterized in that** the length of an axial spacing a between the two measuring devices (6a, b) amounts to between 0 and 20 times the diameter D of the line section (1, 2).

5. Gas pressure regulating and measuring system according to one of Claims 1 to 4,
**characterized in that** the measuring device (6a, b) is preceded or followed by at least one flow straightener (7a, 7b).

6. Gas pressure regulating and measuring system according to one of Claims 3 to 5,
**characterized in that** at least one flow straightener is located between two measuring devices (6a, 6b).

7. Gas pressure regulating and measuring system according to Claim 5 or 6,
**characterized in that** the length of an axial spacing b, b' between the flow straightener (7a, 7b), which is arranged in each case upstream of the measuring device (6a, 6b) in the flow direction, and the measuring device (6a, 6b) is dimensioned between 0 and 20 times the diameter D of the line section (1, 2).

8. Gas pressure regulating and measuring system according to one of Claims 1 to 7,
**characterized in that** a filter and/or separator (10) is arranged, for each flow direction, upstream of the measuring device (6a, 6b) or the regulating device (8) in the flow direction, each filter and/or separator (10) being designed such that it is active in each case in the flow direction.

9. Gas pressure regulating and measuring system according to Claim 8,
**characterized in that** the filters (10a, 10b) are equipped with shut-off flaps of the intermediate-flange type.

10. Gas pressure regulating and measuring system according to Claim 8,
**characterized in that** the filters (10a, 10b) have filter elements which are provided with a mechanical supporting structure.

11. Gas pressure regulating and measuring system according to one of Claims 1 to 10,
**characterized in that** the regulating device (8) is preceded or followed by a preheating device.

12. Gas pressure regulating and measuring system according to one of Claims 1 to 11,
**characterized in that** the regulating device (8) is preceded or followed by a safety device (9).

13. Gas pressure regulating and measuring system according to one of Claims 1 to 12,
**characterized in that** the line section (1, 2) is laid above ground and the line networks (3, 4) are laid underground, and **in that** insulating couplings are installed in the line section (1, 2) or in the line network (3, 4) in the region of ground/atmosphere transition.

14. Gas pressure regulating and measuring system according to one of Claims 1 to 13,
**characterized in that** the gas pressure regulating and measuring system has an appliance for determining the gas composition.

## Revendications

1. Installation de mesure et de régulation de pression de gaz, en particulier pour le gaz naturel, destinée à mesurer et à réguler la pression et le débit du gaz lors du transfert d'un premier réseau de canalisations (3) dans un deuxième réseau de canalisations (4), dans lequel le sens de transport et d'écoulement du gaz change, comprenant:
- au moins une ligne de canalisations (1, 2), qui est raccordée d'une part au premier réseau de canalisations (3) et d'autre part au deuxième réseau de canalisations (4) et qui présente un dispositif d'arrêt (5a, b) à au moins une extrémité,
- au moins un dispositif de mesure (6a, b) opérant dans les deux sens pour mesurer le débit volumique et/ou le débit massique et/ou le débit énergétique dans la ligne de canalisations (1, 2), et comprenant
- un dispositif de régulation (8), qui régule le débit volumique, le débit massique, le débit énergétique et/ou la pression,
**caractérisée en ce que**
le dispositif de régulation (8) est actif dans les deux sens d'écoulement et **en ce que**
le dispositif de mesure (6a, b) et le dispositif de régulation (8) sont abordés par le gaz dans le sens d'écoulement respectif.

2. Installation de mesure et de régulation de pression de gaz selon la revendication 1, **caractérisée en ce qu'**il est prévu au moins deux lignes de canalisations parallèles (1, 2).

3. Installation de mesure et de régulation de pression de gaz selon la revendication 1 ou 2, **caractérisée en ce que** deux dispositifs de mesure (6a, b) sont intégrés l'un derrière l'autre dans la ligne de canalisations (1, 2).

4. Installation de mesure et de régulation de pression de gaz selon la revendication 3, **caractérisée en ce que** la longueur d'une distance axiale a entre les deux dispositifs de mesure (6a, 6b) est comprise entre 0 et 20 fois le diamètre D de la ligne de canalisations (1, 2).

5. Installation de mesure et de régulation de pression de gaz selon l'une quelconque des revendications 1 à 4, **caractérisée en ce qu'**au moins un redresseur d'écoulement (7a, b) est monté avant ou après le dispositif de mesure (6a, b).

6. Installation de mesure et de régulation de pression de gaz selon l'une quelconque des revendications 3 à 5, **caractérisée en ce qu'**au moins un redresseur d'écoulement se trouve entre deux dispositifs de mesure (6a, 6b).

7. Installation de mesure et de régulation de pression de gaz selon la revendication 5 ou 6, **caractérisée en ce que** la longueur d'une distance axiale b, b' entre le redresseur d'écoulement (7a, 7b), qui est disposé respectivement avant l'appareil de mesure (6a, 6b) dans le sens de l'écoulement, et le dispositif de mesure (6a, 6b) est comprise entre 0 et 20 fois le diamètre D de la ligne de canalisations (1, 2).

8. Installation de mesure et de régulation de pression de gaz selon l'une quelconque des revendications 1 à 7, **caractérisée en ce qu'**un filtre et/ou un séparateur (10) est disposé, par sens d'écoulement, avant le dispositif de mesure (6a, 6b) ou le dispositif de régulation (8) dans le sens d'écoulement, dans laquelle chaque filtre et/ou séparateur (10) est réalisé de telle manière qu'il soit actif respectivement dans le sens d'écoulement.

9. Installation de mesure et de régulation de pression de gaz selon la revendication 8, **caractérisée en ce que** les filtres (10a, 10b) sont munis de clapets d'arrêt du type à bride intermédiaire.

10. Installation de mesure et de régulation de pression de gaz selon la revendication 8, **caractérisée en ce que** les filtres (10a, 10b) présentent des éléments de filtre, qui sont pourvus d'une structure de support mécanique.

11. Installation de mesure et de régulation de pression de gaz selon l'une quelconque des revendications 1 à 10, **caractérisée en ce qu'**un dispositif de préchauffage est monté avant ou après le dispositif de régulation (8).

12. Installation de mesure et de régulation de pression de gaz selon l'une quelconque des revendications 1 à 11, **caractérisée en ce qu'**un dispositif de sécurité (9) est monté avant ou après le dispositif de régulation (8).

13. Installation de mesure et de régulation de pression de gaz selon l'une quelconque des revendications 1 à 12, **caractérisée en ce que** la ligne de canalisations (1, 2) est posée en surface et les réseaux de canalisations (3, 4) sont enterrés, et **en ce que** des raccords isolants sont insérés dans la ligne de canalisations (1, 2) ou dans le réseau de canalisations (3, 4) dans la région de la transition sol/atmosphère.

14. Installation de mesure et de régulation de pression de gaz selon l'une quelconque des revendications 1 à 13, **caractérisée en ce que** l'installation de mesure et de régulation de pression de gaz présente un appareil pour la détermination de l'état du gaz.
